# EUROPEAN PATENT SPECIFICATION

(11) **EP 2 099 161 B1**
(45) Date of publication and mention of the grant of the patent: **12.08.2020**
(21) Application number: 08002485.4
(22) Date of filing: 11.02.2008
(51) Int. Cl.: H04W 48/18, H04W 48/20, H04M 11/06

(54) **Method and device for processing data in a communication system**
Verfahren und Vorrichtung zur Verarbeitung von Daten in einem Kommunikationssystem
Procédé et dispositif de données de traitement dans un système de communication

(43) Date of publication of application: 09.09.2009
(73) Proprietor: Nokia Solutions and Networks Oy, 02610 Espoo (FI)
(72) Inventor: Biernat, Krzysztof, 50306 Wroclaw (PL); Tomeczko, Dariusz, 51-670 Wroclaw (PL)
(74) Representative: Nokia EPO representatives

(56) References cited:
- US-A1- 2005 172 016
- GEORGE KOUNDOURAKIS ET AL: "Network-Based Access Selection in Composite Radio Environments" WIRELESS COMMUNICATIONS AND NETWORKING CONFERENCE, 2007.WCNC 2007. IEE E, IEEE, PI, 1 March 2007 (2007-03-01), pages 3877-3883, XP031097847 ISBN: 978-1-4244-0658-6
- LUAN HUANG ET AL: "Network Selection For One-to-Many Services In 3G-Broadcasting Cooperative Networks" 20050530; 20050530 - 20050501, vol. 5, 30 May 2005 (2005-05-30), pages 2999-3003, XP010856000
- KUN YANG ET AL: "A Flexible QoS-aware Service Gateway for Heterogeneous Wireless Networks" IEEE NETWORK, IEEE SERVICE CENTER, NEW YORK, NY, US, vol. 21, no. 2, 1 March 2007 (2007-03-01), pages 6-12, XP011175238 ISSN: 0890-8044
- "Telecommunications and Internet converged Services and Protocols for Advanced Networking (TISPAN); IPTV Architecture; Dedicated subsystem for IPTV functions; ETSI TS 182 028" ETSI STANDARDS, LIS, SOPHIA ANTIPOLIS CEDEX, FRANCE, vol. TISPAN, no. V2.0.0, 1 January 2008 (2008-01-01), XP014040792 ISSN: 0000-0001

## Description

The invention relates to a method and to a device for processing data and to a communication system comprising such a device.

Broadcasting services are well known and are commonly used for video and/or audio streams (e.g., radio and television). With broadcasting services changing to digital services, so did the method of transmission. New standards like DVB-H have been introduced for providing digital broadcasting services (television) even for mobile users that are equipped with tiny handheld terminals.

Ongoing standards offer common broadcasting and multicasting services via the Internet protocol thereby allowing utilization of various IP based transport networks like GPRS, UMTS PS mode, MBMS, WLAN (IEEE 802.11a/b/g), fixed networks like Ethernet, xDSL, etc.

The publication US 2005/172016 A1 (KOSSI JOUNI [FI ET AL) 4 August 2005 (2005-08-04) describes the implementation of an apparatus, method, and system for a network selector for datacasting in hybrid networks. In one aspect, the publication teaches an efficient delivery decision mechanism that takes into account efficiencies that may be achieved by employing one network delivery system over another for any given area. In another aspect, the publication teaches how to dynamically select the bearer for IP multicast data delivery in hybrid networks.

In the publication GEORGE KOUDOURAKIS ET AL: "Network-Based Access Selection in Composite Radio Environments", WIRELESS COMMUNICATIONS AND NETWORKING CONFERENCE, IEEE, March 2007 (2007-03-01), pages 3877-3883, XP031097847, ISBN: 978-1-4244-0658-6, a network-based approach is introduced for access and interface selection in the context of resource management in heterogeneous wireless environments (UMTS, WLAN and DVB-T).

The publication LUAN HUANG ET AL: "Network Selection For One-to-Many Services in 3G-Broadcasting Cooperative Networks", IEEE, 30 May 2005 (2005-05-30), pages 2999-3003, XP010856000, addresses the issue of provisioning "one-to-many" services over heterogeneous wireless networks in terms of how to choose the Access Network that satisfies the bandwidth requirement of services while maximizing the system profit obtained in the combined network.

The publication KUNG YAN ET AL: "A Flexible QoS-aware Service Gateway for Heterogeneous Wireless Networks", IEEE SERVICE CENTER, 1 March 2007 (2007-03-01),), pages 6-12, XP011175238, ISSN: 0890-8044, investigates, how a combination of UMTS cellular networks, wireless LAN ad hoc networks, and DVB-H broadcasting networks, is constructed and managed to provide users with QoS-aware services.

The publication US 2006/062206 A1 (KRISHNASWAMY VIJAYARAGHAVAN [IN]) 23 March 2006 (2006-03-23) describes methods and apparatuses enabling secure multi-link point to point protocol over connected heterogeneous single path access networks. In one embodiment, a method of an access device includes associating the access device with a single-path network and at least one other network, and accessing a data of a service provider through an aggregation server connected to the single-path network and the other network.

The publication EP 1777925 A2 (BROADCOM CORP [US]) 25 April 2007 (2007-04-25) describes that a user may simultaneously access sources of multimedia information via multiple wireless networks using a handheld multimedia gateway. A user interface may support the selection of information services that are each provided separate, but possibly overlapping, viewing spaces.

The publication WO 2006/055784 A2 (THE TRUSTEES OF THE STEVENS [US]; WHITE PATRICK [US]; GIRARD NICOLAS [US]) 26 May 2006 (2006-05-26) describes an apparatus for permitting a mobile terminal having multiple, heterogeneous network connections (e.g., multiple wired or wireless transceivers of various types) to set up and maintain virtual connections over multiple networks to either the same or to multiple destinations. The mobile terminal can "load-share" traffic, i.e., it can distribute segments of traffic over a full set of heterogeneous networks, significantly improving the reliability and availability of communications.

Broadcasting or multicasting services can be accessed via various devices (e.g., TV set, mobile phone, laptop, personal computer, palmtop, etc.) using different transport networks (GPRS, UMTS, DVB-H, LAN, WLAN, MBMS, etc.).

Many such devices are capable of processing a selection of transport networks available, e.g., a mobile phone may support DVB-H, UMTS, WLAN and MBMS. As the device may utilize several such transport networks, the choice which transport network to activate is up to the user. He or she needs to decide which transport technology to use for receiving broadcasting services.

This is detrimental as the user in such case needs detailed knowledge over all transport options and networks to choose from to decide on an efficient utilization of the services provided. Even if the user were aware of all technology and details, s/he would not be able to determine which transport network would be best to select in the actual environment.

The problem to be solved is to overcome the disadvantages as stated above and in particular to provide an efficient approach to select a transport network in particular for broadcasting and/or multicasting services.

This problem is solved according to the features of the independent claims. Further embodiments result from the depending claims.

In order to overcome this problem, a method for processing data in a network is suggested configured to supply several user devices by a plurality of transport networks within an area, wherein in the area two or more of the plurality of transport networks are available for serving the user devices,
- wherein a plurality of parameters is provided by a network component or the plurality of parameters is provided by a user device of a user and by the network component,
- wherein a transport network of the two or more available transport networks of the plurality of transport networks is selected and/or adjusted by a network function based on said plurality of parameters, a history of traffic regarding service requests depending on the area and a history of traffic regarding the user,
- wherein the selected and/or adjusted transport network comprises xDSL functionality, and
- wherein the plurality of parameters provided comprises information regarding the location of the user device of the user and a number of users or subscribers that require a same or different services within the area.

Advantageously, the approach provided allows an efficient selection of at least one transport network without bothering a user. In fact, the service provided is efficient and provides much better results to the user than he or she would be able to obtain by manually selecting the transport network. Selecting the transport network on the network side allows for consideration of a multitude of parameters that are not even obtainable to the user. Moreover, the provider can deliberately support different transport networks dependent on actual requests or demands from users and/or dependent on user's locations to, e.g., provide a smooth and successful viewing experience to a large number of users.

In an embodiment, the plurality of parameters provided comprises information regarding the following:
- a transport network availability;
- available resources;
- connection parameters;
- quality parameters that are in particular supported by the respective transport network;
- user requirements;
- service parameters, in particular bit rate, delay and/or error rate.

In particular, a location of a user's device, a number of users or subscribers that require a same or different services (within a particular location or area), a history of traffic regarding requests depending on the location or area and/or a history of traffic regarding a particular user can be utilized for selecting or adjusting the transport network are considered. It may also be considered a particular program that is required by a certain number of users, a capability of the user's device (which transport network the device is capable of processing), a movement of a user's device (certain transport networks may be more susceptible to movement than others), a type of user or subscription (e.g., a mobile user or a user connected to a fixed network).

At least a portion of such parameters can be utilized for prediction purposes: If certain user requests indicate a tendency of a traffic peak, the provider may utilize the selection and/or adjustment of the transport network accordingly.

In addition, external information may be utilized as well: E.g., the network component may provide an electronic programming guide that indicates that a world-series final needs particular bandwidths and is preferably broadcast a large group of viewers. Furthermore, the network component may provide information regarding the traffic load of the network, which can be utilized in order to beneficially adjust or select the transport network.

In another embodiment, the network function is associated with a network element of the network, wherein a transcoding is provided by said network function. Preferably, the network function is a functionality provided by a network element of the network, wherein the network function provides content delivery towards the selected and/or adjusted transport network.

In a further embodiment, data to be conveyed via the selected and/or adjusted transport network is converted and/or transcoded.

Conversion or transcoding allows the network function to utilize the transport network in an efficient manner, in particular depending on the aforementioned parameters. Hence, a particular network may have limited bandwidth and therefore a broadband signal like, e.g., HDTV, may have to be converted into a signal of reduced bandwidth that can be supplied via, e.g., a narrow-band radio transport network. Such transcoding is preferably provided by said network function.

In a next embodiment, the selected and/or adjusted transport network provides data to at least one user device. In particular, said user device comprises at least one of the following device and/or function:
- a computer,
- a mobile phone,
- a TV set,
- a personal digital assistant.

It is also an embodiment that broadcasting and/or multicasting services are provided via the selected and/or adjusted transport network.

Pursuant to another embodiment, a control signaling is provided by the network function towards the selected and/or adjusted transport network.

Such control signaling can be used to select the transport network or to adjust the transport network, e.g., an operating mode (bandwidth, etc.) of the transport network.

According to an embodiment, several transport networks are selected and/or adjusted pursuant to the at least one parameter.

According to another embodiment, the selected and/or adjusted transport network is or comprises at least one wireless or wired network.

In yet another embodiment, the selected and/or adjusted transport network comprises at least one of the following networks or functionalities:
- GPRS,
- UMTS PS mode,
- MBMS,
- WLAN,
- DVB-H,
- fixed networks, in particular Ethernet.

The problem stated above is also solved by a device comprising a processor unit that is equipped and/or arranged such that the method as described herein is executable on said processor unit.

According to an embodiment, the device is a communication device, in particular a network function in or associated with a network element.

The problem stated supra is further solved by a communication system comprising the device as described herein.

Embodiments of the invention are shown and illustrated in the following figures:
Fig.1 shows a symbolic structure for efficient content delivery, transport network selection and transcoding that may in particular be utilized for broadcasting and multicasting services;
Fig.2 shows a scenario for efficient content delivery, transport network selection and transcoding based on an architecture for IPTV services;
Fig.3 shows an example of transport network selection and transcoding function with interfacing components of a network;
Fig.4 shows switch-over processes of a mobile terminal moving through areas of varying network coverage.

The approach provided in particular enables content delivery, selecting the transport network and transcoding for broadcasting/multicasting services in an efficient way based on, e.g.:
- a transport network availability;
- available resources;
- connection parameters;
- quality parameters that are in particular supported by the respective transport network;
- user requirements;
- service parameters, in particular bit rate, delay and/or error rate;
- number of users or subscribers that require the same or different services within a particular area.

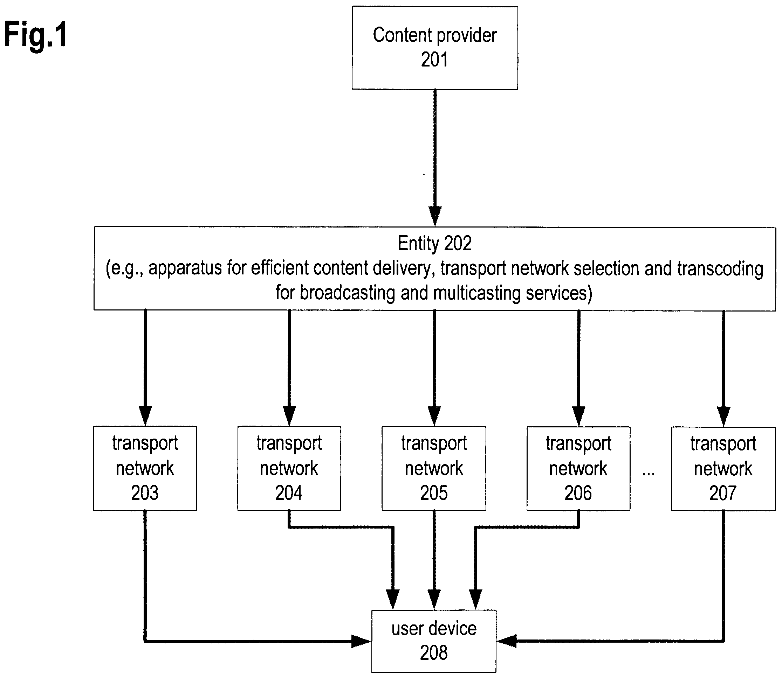

**Fig.1** shows a symbolic structure for efficient content delivery, transport network selection and transcoding that may in particular be utilized for broadcasting and multicasting services.

A content provider 201 conveys data (video and/or audio, user data, signaling data, etc.) to a (logical or physical) entity 202 that may be realized as or associated with a device or an apparatus. The entity 202 can, e.g., be a function or a functionality running on a network component of the network. It may also be a distributed functionality running on several components of the network.

Said entity 202 provides in particular at least one of the following towards transport networks 203 to 207:
- content delivery;
- transport network selection;
- transcoding.

The data processed by entity 202 are in particular broadcast and/or multicast data.

The transport networks 203 to 207 convey ("transport") data to at least one user device 208. It is noted that several such user devices 208 can be supplied by one or more transport network 203 to 207.

The user device 208 may be any kind of data unit capable of receiving and/or processing data provided by one of said transport networks 203 to 207.

The decision of choosing a proper transport network 203 to 207 can thus advantageously be made by the network (instead of the user), e.g., by one centralized entity 202 of said network.

For example, if more than one user wants to receive the same content, this content will be sent to all users via a particular transport network chosen to be efficient for this scenario in view of, e.g., the actual situation of traffic load.

The entity 202 can be a part of a high level network architecture and it may orchestrate delivery of the content to the transport networks 203 to 207. To achieve this, the entity 202 may in particular send control messages necessary for setting up the connection to the respective transport network 203 to 207 and it may trigger useful bearer settings in said transport networks 203 to 207.

Additionally, the entity 202 receives the content from the content provider 201 or from any other content delivery function in a defined way and the entity may further transcode (conversion of signal encoding) the content or signals if such conversion is required by the respective transport network 203 to 207 utilized.

A exemplary scenario may be as follows: 20 users are present within one particular area and all such users want to receive the same content, e.g., watch a movie. All users have devices equipped with transport network 203 capabilities, but only 15 devices can receive transmissions sent via transport network 204 and only 5 devices are capable of processing information provided by transport network 205. All users may be provided with the movie's content via said transport network 203. Alternatively, the 15 users with devices capable of processing data sent via transport network 204 may be supplied via said transport network 204 and the rest (5 users) may be supplied via the transport network 205. If, e.g., the transport network 203 does not support broadcasting, a point-to-point connection between the transport network 203 and each user device has to be established. It may further be the case, that the transport network 203 is typically not used for such broadcasting/multicasting services, in particular as its resources may be needed otherwise, e.g., for different types of connections. In this example, the transport networks 204 and 205 may suit the broadcasting much better. The decision, however, which transport network(s) to choose for which service may dependent inter alia from the service available, the number of users and the capabilities of their devices as well as the location and the type of service requested. These exemplary parameters can be utilized by said entity 202 in order to efficiently select the transport networks that may suit best for each particular scenario or use case.

After the decision upon selecting one or more transport network(s) is made at the entity 202, bearer set up may be triggered for the transport networks selected and transcoding may be processed, if required.

According to the example above, if only 5 users request receiving said movie and all of them have access to transport networks 203 and 205, it may be more efficient to use transport network 203 to convey the movie to all of them and spare the resources of transport network 205 for providing content to a (different) and larger group of users.

The approach suggested herein can be implemented in a converged IPTV infrastructure for mobile and fixed networks, which contains elements and functions for IP based transmission of television and other media like audio, video, messages, etc. via broadcasting or multicasting (sending the same content to limited group of users).

The IPTV converged system may cooperate with transport networks like GSM, UMTS, DVB-H, LAN, etc., which can transmit IP packets to end users' devices.

Multicasting transmission can be realized, e.g., as follows:
- GPRS point to point connection using GSM network,
- UMTS PS -mode point to point connection,
- MBMS point to point connection using UMTS network,
- MBMS point to multipoint connection using UMTS network,
- DVB-H network for broadcasting transmission,
- LAN or WAN fixed networks,
- WiFi and other WLAN networks,
- Other networks that support IP transmission.

Each network may support different signal encoding schemes, e.g., a different set of audio and/or video codecs. Such a diversity of physical connections is confusing (e.g., because of the user not being able to perceive all options to choose from and/or the user being not skilled to deliberately differentiate between various services and/or transport networks offered) or even not transparent for a user and hence may lead to a situation where the user is not able to select a suitable option.

A more efficient solution (also from IPTV network operators' and transport network operators' point of view) is to select the connection type on the network side. This is in particular beneficial if networks not only provide broadcasting services.

The IPTV converged architecture may comprise an entity 202 according to Fig.1. Hence, transport network selection and/or transcoding (e.g., reduction of bit rate according to a supported level of H.264) can be provided by such entity 202.

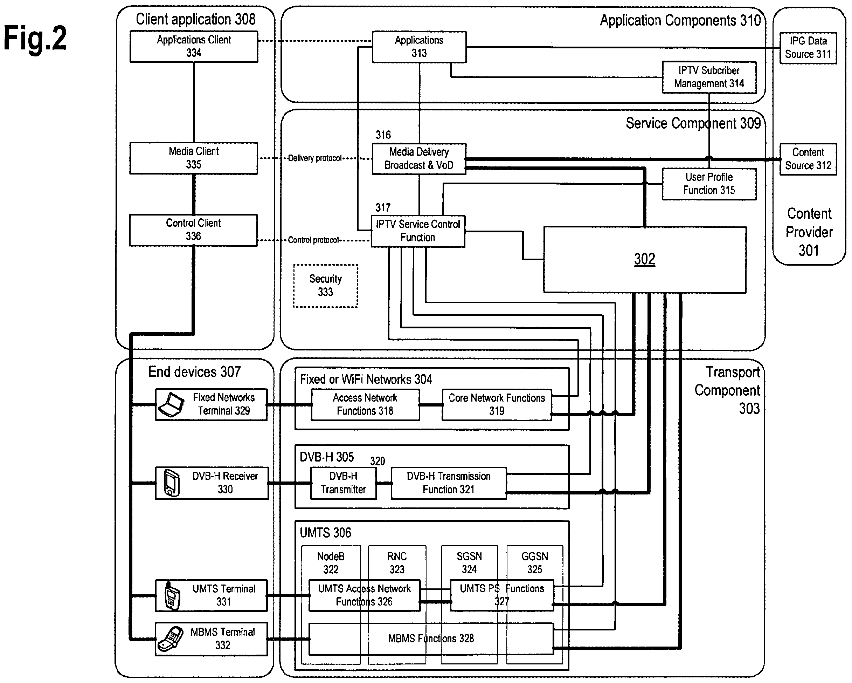

**Fig.2** shows a corresponding scenario based on a basic architecture for IPTV services, e.g., as provided by ITU-T.

An entity 302 is depicted corresponding conceptually to the entity 202 of Fig.1.

A Content Provider 301 comprises an IPG Data Source 311 and a Content Source 312, an entity 310 comprises application components, i.e. Applications 313 and IPTV Subscriber Management 314.

A Service Component 309 comprises the entity 302 that comprises a function(ality) or a device for content delivery, transport network selection and/or transcoding for broadcasting and for multicasting services. Further, the Service Component 309 comprises a Media Delivery Broadcast and VoD unit 316, an IPTV Service Control Function 317, a User Profile Function 315 as well as a Security entity 333.

A Transport Component 303 comprises Fixed or WiFi Networks 304, DVB-H 305 and UMTS 306. The Fixed or WiFi Networks 304 comprises Access Network Functions 318 and Core Network Functions 319, the DVB-H 305 comprises a DVB-H Transmitter 320 and a DVB-H Transmission Function 321 and the UMTS 306 comprises a NodeB 322, a RNC 323, a SGSN 324 and a GGSN 325 as well as UMTS Access Network Functions 326, UMTS PS Functions 327 and MBMS Functions 328.

Various end devices or user devices are summarized in a box 307 comprising a Fixed Network Terminal 329, a DVB-H Receiver 330, a UMTS Terminal 331 and an MBMS Terminal 332.

A client application 308 comprises an Applications Client 334, a Media Client 335 and a Control Client 336.

The IPG Data Source 311 is connected to the Applications 313. The Applications 313 are further connected to the IPTV Service Control Function 317, to the Media Delivery Broadcast & VoD unit 316 and to the IPTV Subscriber Management 314. The Applications 313 are further logically connected to the Application client 334.

The IPTV Subscriber Management 314 is further connected to the User Profile Function 315, which is further connected to the IPTV Service Control Function 317.

The IPTV Service Control Function 317 is further connected to the Media Delivery Broadcast & VoD unit 316, to the Core Network Functions 319, to the DVB-H Transmission Function 321, to the UMTS PS Functions 327, to the MBMS Functions 328 and to the entity 302. The IPTV Service Control Function 317 further communicates with the Control Client 336 via a Control protocol. The Media Delivery Broadcast & VoD unit 316 communicates with the Media Client 335 via a Delivery protocol.

The Content Source 312 is connected to the Media Delivery Broadcast & VoD unit 316 which may forward the content to the entity 302. The entity 302 - according to its particular functionality - may utilize the various transport networks 304, 305 and 306 to convey content to at least one of the following: the Core Network Functions 319, the DVB-H Transmission Function 321, the UMTS PS Functions 327 and/or the MBMS Functions 328.

The Core Network Functions 319 connects to the Access Network Functions 318, which further is connected to the Fixed Network Terminal 329. The DVB-H Transmission Function 321 is further connected to the DVB-H Transmitter 320, which is further connected to the DVB-H Receiver 330. The UMTS PS Functions 327 connects to the UMTS Access Network Functions 326, which further connects to the UMTS Terminal 331. The MBMS Functions 328 unit is further connected to the MBMS Terminal 332.

The MBMS Functions 328 are distributed over the NodeB 322, the RNC 323, the SGSN 324 and the GGSN 325. The UMTS PS Functions 327 are distributed over the SGSN 324 and the GGSN 325 and the UMTS Access Network Functions are distributed over the NodeB 322 and the RNC 323.

The end devices 307, i.e. the Fixed Network Terminal 329, the DVB-H Receiver 330, the UMTS Terminal 331 and the MBMS Terminal 332 are each further connected to the Control Client 336, which is further connected to the Media Client 336, which is further connected to the Application client 334.

As shown in Fig.2, the entity 302 is exemplary deployed (logically and/or physically) within the network, in particular within said Service Component 309. As stated above, said entity 302 may in particular provide content delivery towards the transport networks, selection of the transport network(s) and/or transcoding (if required).

The selection of the transport network(s) may in particular be based on parameters that are gathered from various aforementioned units to which the entity 302 is connected. The following describes an exemplary scenario: A sports event is to be watched by 20 users that are at the same location. All users are equipped with devices capable of processing DVB-H and UMTS transport networks, but only 15 users can receive MBMS transmission and only 5 users are equipped with WiFi. DVB-H transmission may be provided for all users or alternatively, 15 users may be receive MBMS transmission and the rest receives UMTS unicast content. As the whole sports event lasts for about 2 hours, it may be beneficial to supply data via DVB-H, because using UMTS resources for such a long time may be detrimental. In case of short transmissions, however, UMTS may advantageously be used and DVB-H resources remain available for other (longer) transmissions that may be required at a later time.

It is noted that the network selection decision does not have to be a singular ("one-time") prior to starting the transmission. Instead or in addition, such decision could be made dynamically during the transmission since meanwhile many parameters (like number of users, available resources, connection parameters etc.) may change.

### Selection of a transport network:

The selection of the transport network is normally done by a user equipment UE or by the user itself. Many users do not know the difference between WLAN, UMTS, GSM, etc. Hence, the decision which transport network to choose is rather arbitrary and does not lead to a beneficial selection.

The approach provided herewith allows an efficient selection of the transport network without bothering the user. Advantageously, the decision can be made on the network side taking into account further (network-specific) parameters.

The approach is in particular beneficial for broadcasting and multicasting services.

In a converged architecture it is assumed that there is one centralized control node for the heterogeneous set of access networks ("Control Entity"). The entity 202 and 302 shown and described above will hereinafter referred to as "Transport Network Selection and Transcoding Function" TNSTF and may preferably have a control link to the Control Entity.

A UE sends reports that convey information about identifiers of the network nodes to which the User Equipment is or can be connected.

Taking into account hardware limitations, it may be an option not to include the information about all accessible network nodes. Preferably, a relationship between areas served by various network nodes and different access networks shall be determined. Such mapping may be either stored in the TNSTF or in a Common User Profile Database. Since the information about the terminal capabilities is semi-static it can be stored on the network side and updated on request. Additionally, the TNSTF may have constant access to a central repository where all data related to the end user as well as equipments may be stored.

Information relating to the usage of the network resources can be retrieved from an Operation and Maintenance node.

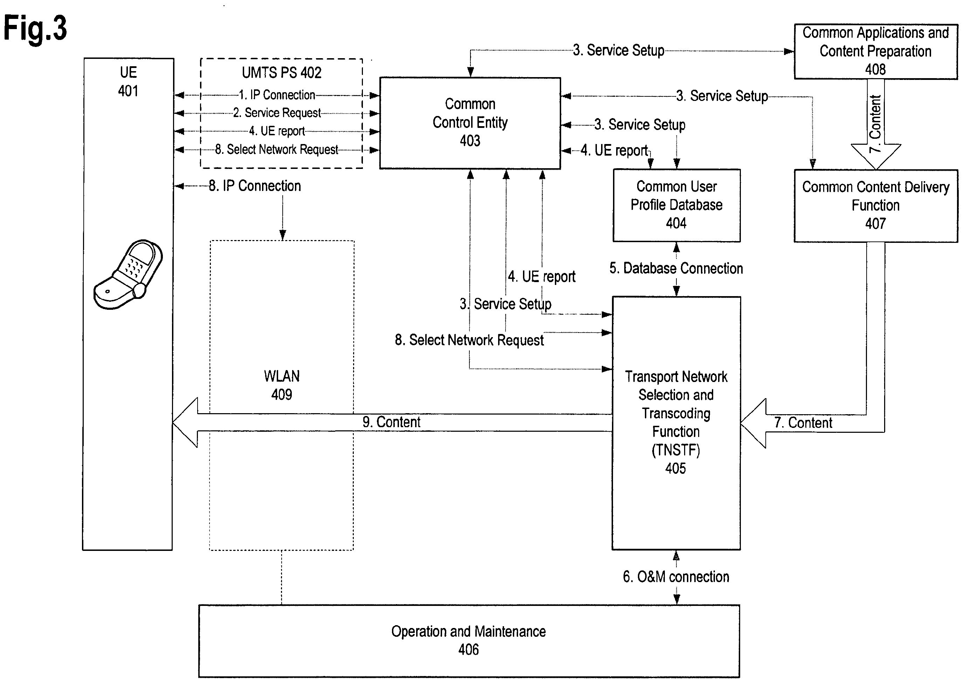

The scenario described is also depicted in **Fig.3** showing typical procedures of the TNSTF with interfacing network components.

Fig.3 shows a UE 401 that is connected to a UMTS PS function 402, which is further connected to a Common Control Entity 403. This Common Control Entity 403 is further connected to a Common Applications and Content Preparation 408, a Common Content Delivery Function 407, a Common User Profile Database 404 and a TNSTF 405. The Common Content Delivery Function 407 is further connected to the Common Applications and Content Preparation 408 and to the TNSTF 405. The TNSTF 405 is further connected to the Common User Profile Database 404, via a WLAN 409 to the UE 401 and to an Operation and Maintenance 406.

An exemplary scenario can be described as follows (the numbers 1 to 9 relate to connections or links as depicted in Fig.3) :
1. The UE 401 sets up the IP connection via any access network 402 which is currently available.
   This connection will be used for setting up the transmission and sending UE reports. This connection is advantageously set up with the Common Control Entity 403.
2. Via this connection, the UE 401 requests the service (e.g., VoD).
3. The Common Control Entity 403 authenticates and authorizes the user via the Common Applications and Content Preparation 408 and updates the Common User Profile Database 404.
   The Common Control Entity 403 is responsible for the service setup and during this procedure informs the TNSTF 405 about the user's request and about the service requested.
4. The Common Control Entity 403 requests the report from the UE 401 which may contain information like available networks, signal strength (in case of mobile networks), UE capabilities, QoS parameters, user preferences, etc.
   The exact form of the report may depend on hardware capabilities of the terminal and on an actual implementation of the solution.
   The UE 401 may continue to send such reports regularly during the transmission although some semi-static information (like user preferences) does not have to be sent permanently. These reports will be sent to the TNSTF 405 and/or stored in the Common User Profile Database 404. This link may be a report link and may be preferably established via the IP protocol.
5. The TNSTF 405 establishes a connection to the Common User Profile Database 404 to obtain updated user data. This connection may be present during the transmission.
6. The TNSTF 405 establishes a connection to the Operation and Maintenance 406 to acquire the information about the usage of current network resources. This connection may be present during the transmission.
7. The content is sent to the TNSTF 405 from the Common Content Delivery Function 407.
   The TNSTF 405 may then decide which transport network to use.
8. The TNSTF 405 sends via the Common Control Entity 403 a request to the UE in order to select the transport network.
   The UE 401 establishes the connection to the selected network 409 and confirms such connection establishment to the TNSTF 405.
9. The TNSTF 405 conveys the content to the UE 401 via the selected network 409.

It is an option that the UE 401 maintains connections with two (or more) networks.

The Common Control Entity 403 may be deployed as or with a Service Control Function, in particular a Call Session Control Function (CSCF) of an IP Multimedia Subsystem (IMS). A Common Profile Storage Framework according to 3GPP 32.808 may serve as a basis for the Common User Profile Database 404.

The selection of the transport network can be achieved by an algorithm implemented in the TNSTF 405. Such algorithm may process parameters provided by the Common User Profile Database 404, the Common Control Entity 403, the Operation and Maintenance subsystem 406 (in case of mobile networks), and the UE 401 (reports delivered via the Common Control Entity).

Additionally, the TNSTF 405 may transcode the content stream if necessary.

For example, a user may receive the content on his laptop connected to the network via WLAN as transport network. The TNSTF receives from the Common Content Delivery Function a HDTV quality stream and transcodes it due to the bandwidth limitations of the user's actual connection to the transport network. When the user connects the laptop via a different transport network, i.e. via a fixed network, transcoding may become obsolete and the user may watch the stream in full HDTV quality. Actually, the TNSTF may decide upon the type of connection and/or upon the capability of the user's device whether or not transcoding is required.

Preferably, the content may be coded using Scalable Video Codecs (SVC) in order to allow for more efficient transcoding.

The TNSTF may be triggered to select the transport network in different ways:
a. The TNSTF may be triggered upon request from the user, e.g., by the UE 401 according to Fig.3.
b. During transmission, the TNSTF may monitor user reports, QoS information, changes in the user profile, current traffic load and service data (e.g., number of users receiving the same service, applicable for broadcasting/multicasting services).
   Based on these data, the TNSTF may decide to change parameters of the transmission or in particular to utilize different transport networks.

This approach may work for different transport networks and/or options of at least one transport network.

In case of DVB-H, the UE is informed that the transmission will be sent via DVB-H and after the confirmation from UE side the signal is redirected to the DVB-H network. As there is no uplink connection in the DVB-H network, the report from the UE may preferably be provided via a different network (e.g. 2G/3G or WLAN).

Regarding the reports described above, information may not only be conveyed by the UE, but from network nodes as well. Hence, traffic in the access part of the converged architecture could be reduced.

Furthermore, seamless handover is possible unless unexpected errors occur during the transition (compared to an "out of coverage situation"). Preferably, an uplink signaling connection between the UE and the Common Control Entity may be maintained. Hence, the TNSTF can be informed about a successful switch-over and it may trigger to stop the transmission towards the network that is no longer necessary to be supplied with the content (if such transmission is not already aborted by the terminal).

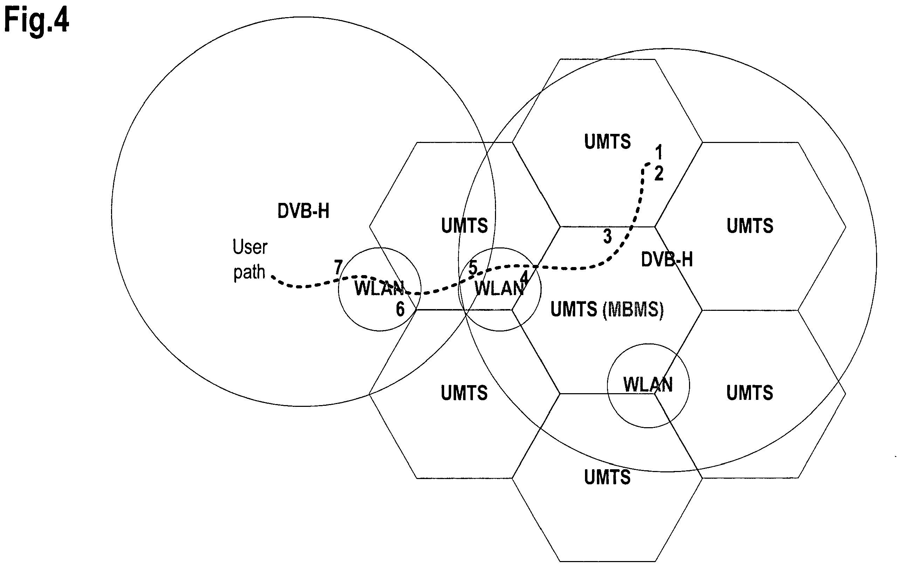

An example of a switch-over process is depicted in **Fig.4****.** (the following numbers 1 to 7 refer to locations depicted in Fig.4) :
1. At the beginning of the example, a user establishes the connection via a UMTS network and sends the request and report via this UMTS network.
   At the location 1, two networks are available, UMTS and DVB-H.
   As an example, the user request is directed to an audio/video stream of a live sports event.
2. Because the UMTS network is not overloaded and only three users in this DVB-H cell want to join this live sports event, the TNSTF selects UMTS PS domain for the transmission.
3. The user enters a different cell that supports MBMS, i.e. said sports event is broadcast via MBMS links.
   In this case, the TNSTF decides to stop the UMTS transmission for this UE and it informs the UE about an MBMS connection.
   The uplink report is still provided via UMTS.
4. The user then leaves the MBMS cell and the TNSTF has to select a new transport network.
   At this location, the TNSTF may choose from WLAN, UMTS and DVB-H. DVB-H may be not the first choice, because there are only three users within the DVB-H area requesting a stream of the sports event.
   WLAN is selected as transport network, because of an actual overload situation of the UMTS resources.
   Only the uplink report connection still is maintained via UMTS.
5. The user enters a different DVB-H cell that already broadcasts this sports event via DVB-H.
   The TNSTF decides to stop the WLAN transmission and informs the UE about the ongoing DVB-H connection.
   The uplink report connection is maintained via UMTS.
6. The user still receives the transmission of the sports event via DVB-H as transport network, but lost the UMTS uplink connection.
   Hence, the UE needs to search for another possibility to change the network and established an uplink connection via WLAN.
7. At this location, the user still receives the transmission via DVB-H, but lost the WLAN uplink connection.
   As there is no other network available to be used for uplink purposes, the user got stuck with receiving the sport event via DVB-H and there is no longer any control by the TNSTF (because of the missing uplink).
   The user may receive the stream until s/he leaves the DVB-H cell or unless the transmission in DVB-H will be stopped by another reason.

### Abbreviations:

- 3GPP: 3rd Generation Partnership Project
- ADSL: Asymmetric Digital Subscriber Line
- ATIS IIF: Alliance for Telecommunication Industry Standards IPTV Interoperability Forum
- CSCF: Call Session Control Function
- DSL: Digital Subscriber Line
- DVB: Digital Video Broadcasting
- DVB-H: Digital Video Broadcasting - Handheld
- ETSI: European Telecommunication Standards Institute
- GGSN: Gateway GPRS Support Node
- GPRS: General Packet Radio Service
- GSM: Global System for Mobile Communication
- IMS: IP Multimedia Subsystem
- IP: Internet Protocol
- IPG: Internet Program Guide
- IPTV: Internet Protocol Television
- ITU: International Telecommunication Union
- LAN: Local Area Network
- MBMS: Multimedia Broadcast Multicast Service
- NodeB: UMTS Base Transceiver Station (BTS)
- PS: Packet Switch mode
- QoS: Quality of Service
- SGSN: Serving GPRS Support Node
- SVC: Scalable Video Codec
- TISPAN: Telecommunication and Internet converged Services and Protocols for Advanced Networking
- TNSTF: Transport Network Selection and Transcoding Function
- UE: User Equipment, Mobile Terminal
- UMTS: Universal Mobile Telecommunication System
- VoD: Video on Demand
- WAN: Wide Area Network
- WiFi: Wireless Fidelity
- WLAN: Wireless Local Area Network

## Claims

1. A method for processing data in a network configured to supply several user devices (208) by a plurality of transport networks (203-207) within an area, wherein in the area two or more of the plurality of transport networks (203-207) are available for serving the user devices (208),
- wherein a plurality of parameters is provided by a network component or the plurality of parameters is provided by a user device (208) of a user and by the network component,
- wherein a transport network of the two or more available transport networks of the plurality of transport networks (203-207) is selected and/or adjusted by a network function (202) based on said plurality of parameters, a history of traffic regarding service requests depending on the area and a history of traffic regarding the user,
- wherein the selected and/or adjusted transport network comprises xDSL functionality, and
- wherein the plurality of parameters provided comprises information regarding the location of the user device (208) of the user and a number of users or subscribers that require a same or different services within the area.

2. The method according to claim 1,
wherein the plurality of parameters provided further comprises information regarding the following:
- a transport network availability;
- available resources;
- connection parameters;
- quality parameters that are in particular supported by the respective transport network;
- user requirements;
- service parameters including bit rate, delay and/or error rate.

3. The method according to any of the preceding claims, wherein the network function (202) is associated with a network element of the network,
wherein a transcoding is provided by said network function (202).

4. The method according to any of claims 1 or 2, wherein the network function (202) is a functionality provided by a network element of the network,
wherein the network function (202) provides content delivery towards the selected and/or adjusted transport network.

5. The method according to any of the preceding claims, wherein data to be conveyed via the selected and/or adjusted transport network is converted and/or transcoded.

6. The method according to any of the preceding claims, wherein the selected and/or adjusted transport network provides data to at least one user device.

7. The method according to claim 6, wherein said user device comprises at least one of the following device :
- a computer,
- a mobile phone,
- a television/TV set,
- a personal digital assistant.

8. The method according to any of the preceding claims, wherein broadcasting and/or multicasting services are provided via the selected and/or adjusted transport network.

9. The method according to any of the preceding claims, wherein a control signaling is provided by the network function towards the selected and/or adjusted transport network.

10. The method according to any of the preceding claims, wherein several transport networks are selected and/or adjusted pursuant to the plurality of parameters.

11. The method according to any of the preceding claims, wherein the selected and/or adjusted transport network is or comprises at least one wireless or wired network.

12. The method according to any of the preceding claims, wherein the selected and/or adjusted transport network comprises at least one of the following networks or functionalities:
- General Packet Radio Service /GPRS,
- Universal Mobile Telecommunication System Packet Switch /UMTS PS mode,
- Multimedia Broadcast Multicast Service /MBMS,
- Wireless Local Area Network/WLAN,
- Digital Video Broadcasting - Handheld /DVB-H,
- fixed networks including the Ethernet.

13. A device comprising a processor unit that is arranged to execute the method according of any of the preceding claims on said processor unit.

14. Communication system comprising the device according to claim 13.

## Patentansprüche

1. Verfahren zum Verarbeiten von Daten in einem Netz, das konfiguriert ist, einige Anwendervorrichtungen (208) durch mehrere Transportnetze (203-207) innerhalb eines Bereichs zu versorgen, wobei in dem Bereich zwei oder mehrere der mehreren Transportnetze (203-207) zum Bedienen der Anwendervorrichtungen (208) verfügbar sind,
- wobei mehrere Parameter durch eine Netzkomponente bereitgestellt werden oder die mehreren Parameter durch eine Anwendervorrichtung (208) eines Anwenders und durch die Netzkomponente bereitgestellt werden,
- wobei ein Transportnetz der zwei oder mehreren verfügbaren Transportnetze der mehreren Transportnetze (203-207) ausgewählt wird und/oder durch eine Netzfunktion (202) anhand der mehreren Parameter angepasst wird, wobei eine Verkehrsentwicklung bezüglich Dienstanforderungen von dem Bereich und einer Verkehrsentwicklung bezüglich des Anwenders abhängt,
- wobei das ausgewählte und/oder angepasste Transportnetz eine xDSL-Funktionalität umfasst und
- wobei die mehreren bereitgestellten Parameter Informationen bezüglich des Orts der Anwendervorrichtung (208) des Anwenders und einer Anzahl von Anwendern oder Teilnehmern, die denselben Dienst oder andere Dienste innerhalb des Bereichs benötigen, umfassen.

2. Verfahren nach Anspruch 1,
wobei die mehreren bereitgestellten Parameter ferner Informationen bezüglich des Folgenden umfassen:
- Transportnetzverfügbarkeit;
- verfügbare Betriebsmittel;
- Verbindungsparameter;
- Qualitätsparameter, die insbesondere durch das jeweilige Transportnetz unterstützt werden;
- Anwenderanforderungen; und
- Dienstparameter, die eine Bitrate, eine Verzögerung und/oder eine Fehlerrate enthalten.

3. Verfahren nach einem der vorhergehenden Ansprüche, wobei die Netzfunktion (202) einem Netzelement des Netzes zugeordnet ist,
wobei eine Transcodierung durch die Netzfunktion (202) bereitgestellt wird.

4. Verfahren nach einem der Ansprüche 1 oder 2, wobei die Netzfunktion (202) eine Funktionalität ist, die durch ein Netzelement des Netzes bereitgestellt wird,
wobei die Netzfunktion (202) eine Inhaltslieferung in Richtung des ausgewählten und/oder angepassten Transportnetzes bereitstellt.

5. Verfahren nach einem der vorhergehenden Ansprüche, wobei Daten, die über das ausgewählte und/oder angepasste Transportnetz zu befördern sind, umgesetzt und/oder transcodiert werden.

6. Verfahren nach einem der vorhergehenden Ansprüche, wobei das ausgewählte und/oder angepasste Netz Daten an mindestens eine Anwendervorrichtung liefert.

7. Verfahren nach Anspruch 6, wobei die Anwendervorrichtung mindestens eine der folgenden Vorrichtungen umfasst:
- einen Computer,
- ein Mobiltelefon,
- ein Fernseh-/TV-Gerät,
- einen persönlichen digitalen Assistenten.

8. Verfahren nach einem der vorhergehenden Ansprüche, wobei das Senden und/oder Multicasten von Diensten über das ausgewählte und/oder angepasste Transportnetz bereitgestellt wird.

9. Verfahren nach einem der vorhergehenden Ansprüche, wobei eine Steuersignalisierung durch die Netzfunktion in Richtung des ausgewählten und/oder angepassten Transportnetzes bereitgestellt wird.

10. Verfahren nach einem der vorhergehenden Ansprüche, wobei einige Transportnetze gemäß den mehreren Parametern ausgewählt und/oder angepasst werden.

11. Verfahren nach einem der vorhergehenden Ansprüche, wobei das ausgewählte und/oder angepasste Transportnetz zumindest ein drahtloses oder verdrahtetes Netz ist und/oder dieses umfasst.

12. Verfahren nach einem der vorhergehenden Ansprüche, wobei das ausgewählte und/oder angepasste Transportnetz mindestens eines der folgenden Netze oder Funktionalitäten umfasst:
- Allgemeiner paketorientierter Funkdienst/GPRS,
- "Universal Mobile Telecommunication System Packet Switch"-Betriebsart/UMTS-PS-Betriebsart,
- "Multimedia Broadcast Multicast"-Dienst/MBMS-Dienst,
- Drahtloses lokales Netz, WLAN,
- Digitaler Videorundfunk für mobile Endgeräte/DVB-H,
- feste Netze einschließlich des Ethernets.

13. Vorrichtung, die eine Prozessoreinheit umfasst, die ausgelegt ist, das Verfahren nach einem der vorhergehenden Ansprüche auf der Prozessoreinheit auszuführen.

14. Kommunikationssystem, das die Vorrichtung nach Anspruch 13 umfasst.

## Revendications

1. Procédé de traitement de données dans un réseau configuré pour alimenter plusieurs dispositifs utilisateurs (208) par une pluralité de réseaux de transport (203-207) dans une zone, dans lequel dans la zone deux ou plusieurs de la pluralité de réseaux de transport (203-207) sont disponibles pour desservir les dispositifs utilisateurs (208),
- dans lequel une pluralité de paramètres est fournie par un composant de réseau ou la pluralité de paramètres est fournie par un dispositif utilisateur (208) d'un utilisateur et par le composant de réseau,
- dans lequel un réseau de transport des deux ou plusieurs réseaux de transport disponibles de la pluralité de réseaux de transport (203-207) est sélectionné et/ou ajusté par une fonction de réseau (202) sur la base de ladite pluralité de paramètres, d'un historique de trafic concernant des requêtes de service dépendant de la zone et d'un historique de trafic concernant l'utilisateur,
- dans lequel le réseau de transport sélectionné et/ou ajusté comprend une fonctionnalité xDSL, et
- dans lequel la pluralité de paramètres fournie comprend des informations concernant l'emplacement du dispositif utilisateur (208) de l'utilisateur et un nombre d'utilisateurs ou d'abonnés qui nécessitent un même service ou des services différents dans la zone.

2. Procédé selon la revendication 1,
dans lequel la pluralité de paramètres fournie comprend en outre des informations concernant :
- une disponibilité de réseaux de transport ;
- des ressources disponibles ;
- des paramètres de connexion ;
- des paramètres de qualité qui sont en particulier pris en charge par le réseau de transport respectif ;
- des exigences d'utilisateur ;
- des paramètres de service, en particulier un débit, un retard et/ou un taux d'erreurs.

3. Procédé selon l'une quelconque des revendications précédentes, dans lequel la fonction de réseau (202) est associée à un élément de réseau du réseau,
dans lequel un transcodage est assuré par ladite fonction de réseau (202).

4. Procédé selon l'une quelconque des revendications 1 ou 2, dans lequel la fonction de réseau (202) est une fonctionnalité fournie par un élément de réseau du réseau,
dans lequel la fonction de réseau (202) assure une délivrance de contenu vers le réseau de transport sélectionné et/ou ajusté.

5. Procédé selon l'une quelconque des revendications précédentes, dans lequel des données destinées à être acheminées par l'intermédiaire du réseau de transport sélectionné et/ou ajusté sont converties et/ou transcodées.

6. Procédé selon l'une quelconque des revendications précédentes, dans lequel le réseau de transport sélectionné et/ou ajusté fournit des données à au moins un dispositif utilisateur.

7. Procédé selon la revendication 6, dans lequel ledit dispositif utilisateur comprend au moins un des dispositifs et/ou fonctions suivants :
- un ordinateur,
- un téléphone mobile,
- un téléviseur,
- un assistant numérique personnel.

8. Procédé selon l'une quelconque des revendications précédentes, dans lequel des services de diffusion et/ou multidiffusion sont fournis par l'intermédiaire du réseau de transport sélectionné et/ou ajusté.

9. Procédé selon l'une quelconque des revendications précédentes, dans lequel une signalisation de commande est fournie par la fonction de réseau vers le réseau de transport sélectionné et/ou ajusté.

10. Procédé selon l'une quelconque des revendications précédentes, dans lequel plusieurs réseaux de transport sont sélectionnés et/ou ajustés en vertu de la pluralité de paramètres.

11. Procédé selon l'une quelconque des revendications précédentes, dans lequel le réseau de transport sélectionné et/ou ajusté est ou comprend au moins un réseau sans fil ou filaire.

12. Procédé selon l'une quelconque des revendications précédentes, dans lequel le réseau de transport sélectionné et/ou ajusté comprend au moins un des réseaux ou fonctionnalités suivants :
- un service radio par paquets général / GPRS,
- un mode à commutation de paquets de système de télécommunications mobile universel / UMTS PS,
- un service de diffusion-multidiffusion multimédia / MBMS,
- un réseau local sans fil /WLAN,
- une diffusion vidéo numérique pour portables/ DVB-H,
- des réseaux fixes comportant l'Ethernet.

13. Dispositif comprenant une unité de processeur agencée pour exécuter le procédé selon l'une quelconque des revendications précédentes sur ladite unité de processeur.

14. Système de communication comprenant le dispositif selon la revendication 13.
